# EUROPEAN PATENT SPECIFICATION

(11) **EP 2 606 203 B1**
(45) Date of publication and mention of the grant of the patent: **19.11.2014**
(21) Application number: 10728621.3
(22) Date of filing: 04.06.2010
(51) Int. Cl.: F01D 5/14, F01D 5/18, F01D 9/04

(54) **TRANSONIC GAS TURBINE STAGE AND METHOD**
TRANSSCHALLGASTURBINENSTUFE UND VERFAHREN
ETAGE DE TURBINE À GAZ TRANSSONIQUE ET PROCÉDÉ ASSOCIÉ

(43) Date of publication of application: 26.06.2013
(73) Proprietor: Institut Von Karman De Dynamique Des Fluides, 1640 Rhode-Saint-Genese (BE)
(72) Inventor: PANIAGUA PEREZ, Guillermo, B-1640 Rhode-Saint-Genese (BE); SARACOGLU, Bayindir, B-1640 Rhode-Saint-Genese (BE)
(74) Representative: Mackett, Margaret Dawn
(86) International application number: PCT/EP2010/057864
(87) International publication number: WO 2011/150979

(56) References cited:
- EP-A2- 1 300 547
- EP-A2- 1 627 990
- US-A- 3 403 890
- US-A1- 2008 149 205
- SARACOGLU B H ET AL: "Blunt trailing edge cooling effects at supersonic regime", 2 August 2009 (2009-08-02), 45TH AIAA/ASME/SAE/ASEE JOINT PROPULSION CONFERENCE & EXHIBIT - 7TH INTERNATIONAL ENERGY CONVERSION ENGINEERING CONFERENCE : 2 - 5 AUGUST 2009, DENVER, COLORADO ; [PAPERS], AMERICAN INSTITUTE OF AERONAUTICS AND ASTRONAUTICS, US, PAGE(S) 1 - 10, XP008133881, ISBN: 978-1-56347-976-2 paragraph [Abstract] paragraph [III B] - paragraph [00IV]

## Description

### TECHNICAL FIELD

The present invention relates to a transonic gas turbine stage and to a method for alleviating the impact of shocks in a supersonic or transonic gas turbine stage.

### BACKGROUND

A gas turbine stage extracts mechanical energy from a gas flow. It usually comprises a turbine nozzle formed by a stator comprising a plurality of stator vanes, to expand a flow of high-pressure, high-temperature gas, and, directly downstream of this turbine nozzle, a rotor, comprising a plurality of rotor blades, which is rotatably driven by this gas flow.

The development of efficient gas turbines, in particular for aeronautical propulsion, with higher thrust, reduced noise and pollutants emissions request a thorough knowledge of complex phenomena in gas dynamics. Currently most of industrial turbomachinery components are still being designed using steady solvers, taking into account the mean effect of the unsteadiness, which fails to predict the actual unsteady force and heat fluxes. Advances in the efficiency of gas turbine stages largely depend on the understanding of unsteady flows and the ability to control them in a passive or active manner.

Turbine stages can be classified into subsonic gas turbine stages and transonic gas turbine stages depending on the speed of the flow exiting the turbine nozzle. Highly loaded single stage gas turbines have been developed to minimize the turbine size, a fundamental constraint notably in helicopter engines. These single-stage turbines are characterized by supersonic vane outlet conditions. In such transonic turbine stages, guide vane trailing edge shocks provide a major contribution to the turbine loss. According to Yasa T., Paniagua G., and Bussolin A., in "Performance Analysis of a Transonic High Pressure Turbine", Proceedings of the 7th European Conference on Turbomachinery, Athens, March 2007, an increase in the vane outlet Mach number from 0.9 to 1.2 leads to a drop in 4% efficiency.

Furthermore, the large guide vane exit pressure gradients govern the rotor flow field. The guide vane trailing edge shocks sweeps the rotor crown towards the leading edge, originating large fluctuations in static pressure and heat transfer. In the fully rotating transonic turbine stage investigated by Paniagua G., Denos R., and Almeida S. in "Effect of Hub Endwall Cavity Flow Ejection on the Flowfield of a Transonic High Pressure Turbine", Journal of Turbomachinery. Vol. 126, No. 4, pp 578-586, October 2004, the amplitude of the fluctuations in the blade tangential force was about 70% of the mean level. This may result in low- or high-cycle fatigue problems.

Additionally, the impact of the guide vane trailing edge shocks on the rotor blade boundary layer can result in an intermittent apparition of separation bubbles, abating the rotor aerothermal performance, as described by De la Loma A., Paniagua G., and Verrastro D., in "Transonic Turbine Stage Heat Transfer Investigation in Presence of Strong Shocks". Proceedings of the ASME Turbo Expo 2007, ASME Paper GT2007-27101.

The turbine exit flow field also exhibits significant non-uniformities in the azimuth direction with a periodicity of one vane pitch. The effect of the guide vane trailing edge shocks is a key contributor to these non-uniformities, as shown by Dénos R. and Paniagua G., in "Effect of Vane-Rotor Interaction on the Unsteady Flowfield downstream of a Transonic HP Turbine". Journal of Power and Energy. Part A., Vol. 219, No. 6, pp 431-442. September 2005. The guide vane trailing edge shocks cause a large static pressure variation in the circumferential direction at the vane exit producing high levels of rotor unsteady forcing.

### STATE OF THE ART

Japanese Patent Application Laid-Open JP 10-68304 disclosed a method for alleviating the shocks generated by a supersonic turbine vane by blowing air from a slot located at the pressure side of the vane near its trailing edge. This was also born out by the experiments reported by Motallebi and Norbury in "The Effect of Base Bleed on Vortex Shedding and Base Pressure in Compressible Flow ", Journal of Fluid Mechanics , vol. 110, 1981, as well as those in C.H. Sieverding, M. Stanislas, J. Snoeck, "The Base Pressure Problem in Transonic Turbine Cascades", ASME Journal of Engineering for Power, 1979. However, the mass flow rates reported as optimal to alleviate the shocks by C.H. Sieverding in "The influence of Trailing Edge Ejection on the Base Pressure in Transonic Turbine Cascades", ASME Journal of Engineering for Power, 105:215-222, 1983, as well as by M. Raffel and F. Kost, "Investigation of Aerodynamic Effects of Coolant Ejection at the Trailing Edge of a Turbine Blade Model by PIV and Pressure Measurements", Experiments in Fluids, 24:447-461, 1998 are insufficient to ensure an adequate cooling of the supersonic turbine vane. A compromise therefore has to be found between the moderate flow preferred for alleviating the shocks, and the higher flow rates normally required to ensure the cooling of the turbine vanes.

In European patent application publication EP 1 627 990, as well as in US Patent US 5,397,217 and German patent DE 43 33 865 C1, it was disclosed to have pulsating trailing edge jets in turbine guide vanes.

In US Patent Application Publication US 2008/0149205, it was proposed to blow an unsteady fluid stream from the trailing edge of a rotor blade or stator vane in order to mitigate a turbulent wake. In the case of a rotor blade it was also proposed to synchronise the unsteady fluid stream with the passage of struts or guide vanes downstream. However, this disclosure did not address the problem of guide vane trailing edge shockwaves in supersonic or transonic turbine stages.

### SUMMARY OF THE INVENTION

It is an object of the present invention to influence the amplitude, shape and position of the guide vane trailing edge shocks on downstream rotor blades in a supersonic or transonic turbine stage, while ensuring sufficient fluid cooling of the guide vane.

In at least one embodiment of the present invention, the impact of shocks from at least one of the guide vanes of a turbine nozzle in a transonic gas turbine stage on the rotor blades of a rotor of the same turbine stage is alleviated by blowing an unsteady cooling fluid stream from a surface of said guide vane, within the rear 25% of the guide vane chord. Said unsteady stream is synchronised with a rotor blade passing frequency so as to have a flow rate minimum when a rotor blade is within an area around a shock originating at said guide vane.

By varying the mass flow rate of the cooling fluid stream, it is possible to compromise between the cooling requirements and the moderate flow rate found to be most effective for alleviating the shocks in the wake of the guide vane. Since the shocks are weakened just when a rotor blade passes through said wake, the impact of the shocks on the rotor blade is minimised, as well as the associated stresses and turbine losses.

Advantageously, said unsteady cooling fluid jet may be a pulsating jet, which is comparatively easy to obtain using pulsating valves and/or actuators.

Advantageously, said unsteady cooling fluid jet may be a gas jet. Gasses are conventionally used as cooling fluids for turbine guide vanes, and a moderate gas jet will also normally be particularly efficient in alleviating the shocks.

Advantageously, said unsteady cooling fluid jet may be located at the pressure side of the guide vane, to prevent the generation of an additional shock.

To carry out the abovementioned method, in at least one embodiment of the present invention, a supersonic or transonic gas turbine stage comprises a turbine nozzle with guide vanes, a rotor with rotor blades, and a cooling fluid circuit comprising at least one output at the surface of at least one of said guide vanes, within the rear 25% of the guide vane chord, and a flow control device synchronised with a rotor blade passing frequency so as to have a flow rate minimum when a rotor blade is within an area around a shock originating at said guide vane.

Advantageously, said flow control device may be a valve located between a pressurised fluid source and said output. Alternatively, however, said flow control device may be an oscillating diaphragm or piston in a fluid chamber connected to said output.

The present invention also relates to gas turbines and jet engines comprising such a transonic turbine stage, as well as to vehicles, such as aircraft or ships, powered by such gas turbines or jet engines, power generation plants and gas pipeline pumping stations.

Other details and particular features of the invention emerge from the attached claims and from the description below.

### BRIEF DESCRIPTION OF THE DRAWINGS

Figure 1 shows schematically a prior art transonic turbine stage, comprising a set of guide vanes and a set of rotor blades mounted on a rotor;
Figure 2 shows schematically the trailing edge of one of the guide vanes of the supersonic or transonic turbine stage of Figure 1;
Figure 3 shows schematically a first embodiment of a supersonic or transonic turbine stage according to the invention, with a guide vane cooling fluid circuit comprising a rotating valve connected to the blade rotor;
Figure 4 shows schematically a second embodiment of a supersonic or transonic turbine stage according to the invention, with a guide vane cooling fluid circuit comprising a cooling fluid chamber with an oscillating diaphragm; and
Figure 5 shows a graph of the cooling fluid flow rate in an embodiment of a method for alleviating guide vane shocks according to the invention.

### DETAILED DESCRIPTION

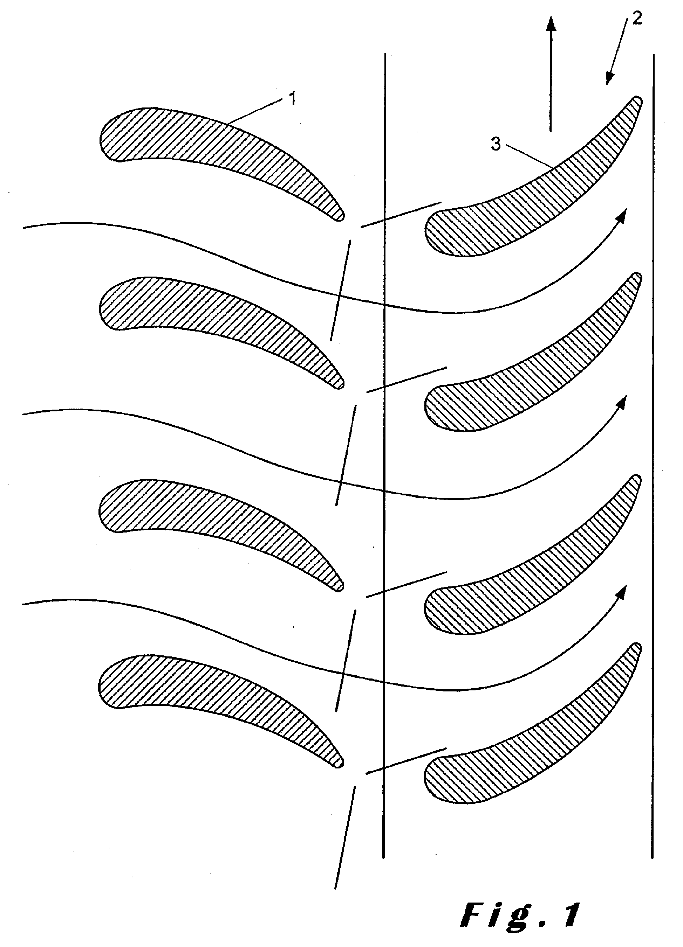

An example of a prior art gas turbine stage is illustrated in Figure 1. In this reaction turbine stage, a gas flow goes through an expansion nozzle formed by a set of guide vanes 1 which, by tangentially diverting the gas flow, accelerate it. In the illustrated transonic turbine stage, the gas flow at the exit of this expansion nozzle reaches a supersonic speed. The gas flow then reaches a rotor 2, comprising a set of profiled rotor blades 3, wherein it generates lift L, and thus a torque around an axis of rotation of the rotor 2.

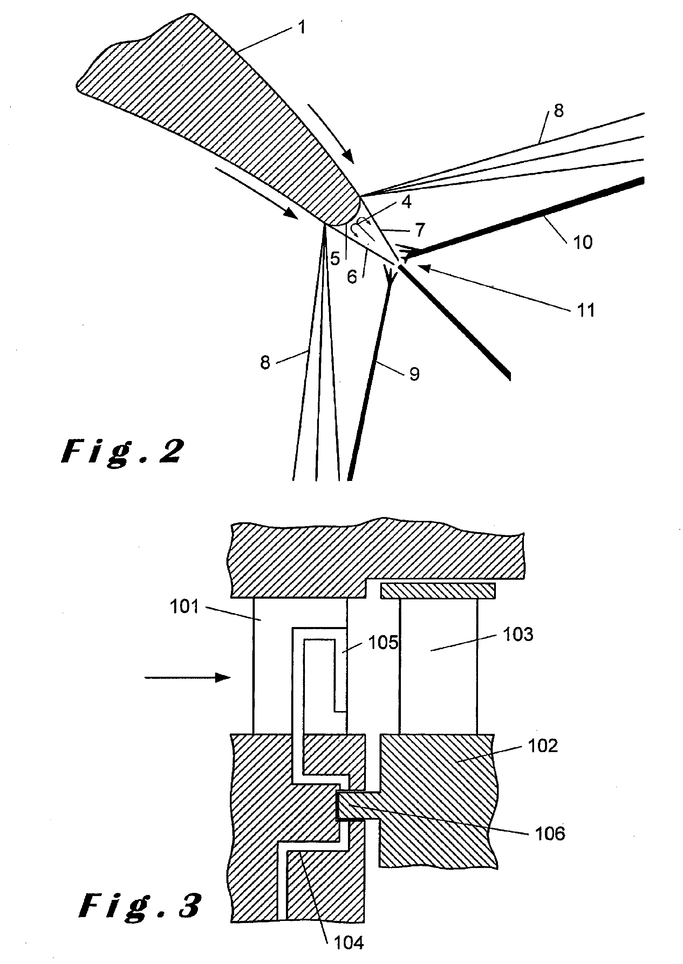

The gas flow at the trailing edge of one of the guide vanes 1 is illustrated in greater detail in Figure 2. As can be seen in this drawing, a small base region 4 forms behind the trailing edge 5, between the separated shear layers 6,7 of, respectively, the pressure and suction sides of the guide vane 1. Expansion lines 8 radiate from the points of separation of the shear layers 6,7, and shocks 9,10 form at the confluence region 11 of the separated shear layers 6,7, where the gas flow goes back to subsonic.

These trailing edge shocks 9,10 cause several problems. They cause efficiency losses, with trailing edge losses accounting for typically one third of the total loss in transonic turbines. But they also cause important cyclic stresses in the rotor blades 3, as the latter impact these shocks 9,10 in their movement around the rotor axis.

Figure 3 illustrates schematically a first embodiment of a transonic turbine stage according to the invention. This transonic turbine stage also comprises a turbine nozzle formed by a set of guide vanes 101, and, downstream of this turbine nozzle, a rotor 102 with a set of rotor blades 103. In order to cool the guide vanes 101 in the high-temperature gas flow, this transonic turbine stage also comprises a cooling fluid circuit 104. This cooling fluid circuit 104 circulates a cooling fluid, in particular a cooling gas, such as air, under pressure, to fluid passages in the guide vanes 101 and to outlets 105 at the trailing edges of the guide vanes 101. If the turbine stage is a turbine stage of a turbomachine, such as a jet engine, which also comprises a compressor, the cooling gas may be diverted from said compressor.

The cooling fluid circuit 104 also comprises a rotating valve 106 connected to the rotor 102. This rotating valve is configured so as to decrease the mass flow of the cooling fluid jet exiting the outlets 105 while a rotor blade 103 is in the area behind the guide vane 101 where it would impact a shock.

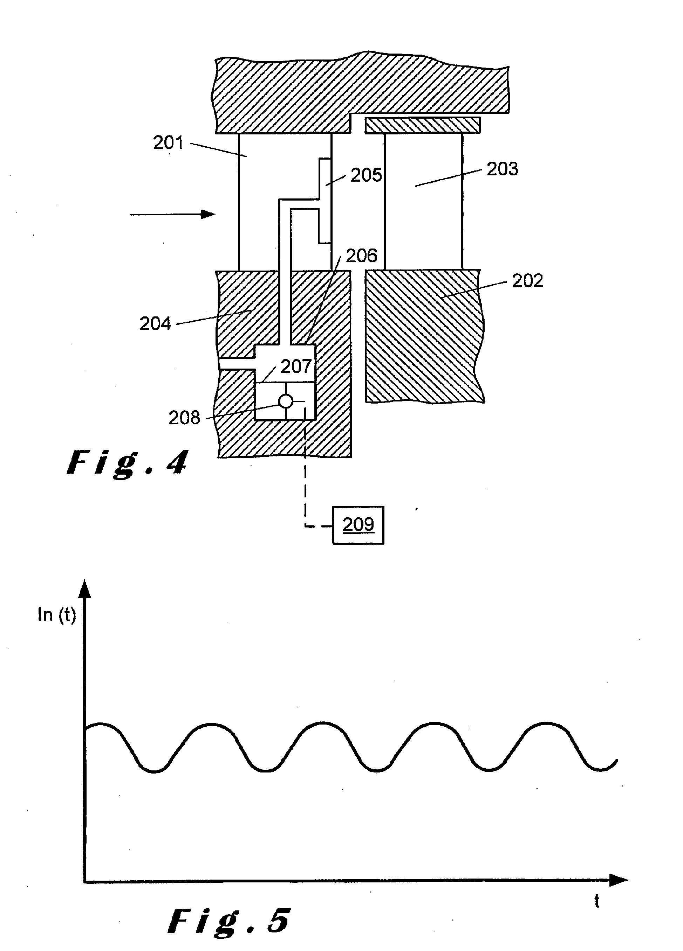

It has been found that a moderate fluid jet at or near the trailing edge of the guide vane 101 alleviates the trailing edge shocks. However, a continuous fluid jet at that moderate level would normally be insufficient to ensure an adequate cooling of the trailing edge. By generating a pulsating jet with mass flow rate minima 101 synchronized with the passage of the rotor blades 103, as illustrated in the graph of Figure 5, showing the mass flow rate at an outlet 105 as a function of time, it is possible to reach a compromise between the moderate mass flow rate associated with the shock alleviation, and the higher mass flow rate associated with the guide vane cooling.

Moreover, an unsteady blowing jet generates both coherent and incoherent structures. When reducing the mass flow rate, the jet is stable and almost not dependent on the Reynolds number, so that it can be assimilated to a "mass sink" at the guide vane wall. However, in the blowing phase the flow field structures are unstable and dependent on the jet Reynolds number. This complex interaction is further influenced by the jet/boundary layer ratio of scales, by the turbulence intensity, external flow curvature, pressure gradients and shock wave interaction.

An equivalent pulsating cooling fluid jet may be generated by a variety of different means, apart from a rotating valve. For instance, in a second embodiment illustrated in Figure 4, and which also comprises a transonic turbine stage comprising a turbine nozzle formed by a set of guide vanes 201, a rotor 202 with a set of rotor blades 203 downstream of this turbine nozzle, and a cooling fluid circuit 204 for circulating a cooling fluid through passages in the guide vanes 201 and to outlets 205 at their trailing edges, the cooling fluid circuit 204 includes a fluid chamber 206 with a diaphragm 207. Alternatively to the diaphragm 207, a piston could also be used. A piezoelectric actuator 208 is linked to this diaphragm 207 and connected to a control unit 209 synchronised with the rotor 202. In this embodiment, the fluctuation in the cooling fluid jet mass flow rate illustrated in Fig. 5 is obtained by oscillating the diaphragm 207 with the actuator 208.

Both the transonic turbine stage illustrated in Fig. 3 and the transonic turbine stage illustrated in Fig. 4 may be part of a gas turbine or of a jet engine (turbojet or turbofan). Such a gas turbine or jet engine may be used to power a vehicle, such as an aircraft, in particular a helicopter, or a ship.

Although the present invention has been described with reference to specific exemplary embodiments, it will be evident that various modifications and changes may be made to these embodiments without departing from the broader scope of the invention as set forth in the claims. For instance, if the rear of the guide vane is very thin, the cooling fluid jet may not be blown directly from the trailing edge of the guide vane, as illustrated in both embodiments, but from its vicinity instead, preferably from the pressure side of the guide vane. Also, the device can also be used to pulsate the shocks at different frequencies. Such an implementation allows modifying the main fluctuating frequencies. New frequencies not multiple of the number of vanes can be introduced to alter the rotor forced response. Accordingly, the description and drawings are to be regarded in an illustrative sense rather than a restrictive sense.

## Claims

1. A method for alleviating, in a transonic gas turbine stage which comprises a turbine nozzle with guide vanes (101; 201) and a rotor (102; 202) with rotor blades (103; 203), the impact of shocks from at least one of said guide vanes (101,201) on the rotor blades (103; 203), the method comprising blowing an unsteady cooling fluid jet from a surface of said at least one guide vane (101; 201);
the method further comprises synchronising said unsteady cooling fluid jet with a rotor blade (103; 203) passing frequency so as to have a flow rate minimum when a rotor blade (103; 203) is within an area around a shock originating at said guide vane (101; 201), said unsteady cooling jet being blown from said surface within the rear 25 % of a chord of said at least one guide vane (101; 201).

2. A method according to claim 1, wherein said unsteady cooling fluid jet is a pulsating jet.

3. A method according to claim 1 or 2, wherein said unsteady cooling fluid jet is a gas jet.

4. A method according to any one of the previous claims, wherein said unsteady cooling fluid jet is located at the pressure side of said at least one guide vane (101; 201).

5. A method according to any one of the previous claims, wherein said unsteady cooling fluid jet is blown with at least one additional frequency not multiple of the number of vanes.

6. A transonic gas turbine stage comprising:
a turbine nozzle with guide vanes (101; 201);
a rotor (102,202) with rotor blades (103; 203); and
a cooling fluid circuit (104, 105; 204, 205, 206, 207, 208, 209) for circulating cooling fluid to at least one of said guide vanes (101; 201), the cooling fluid circuit comprising at least one outlet (105; 205) at the surface of said at least one guide vane (101; 201) and a flow control device for generating unsteady cooling jets of cooling fluid;
whereby said at least one outlet (105; 205) is located within the rear 25 % of a chord of said at least one guide vane (101; 201);
and in that said flow control device generates said unsteady cooling jets with a minimum mass flow rate when a rotor blade (103; 203) is within an area around a shock originating at said guide vane (101; 201), said unsteady jets being synchronised with a rotor blade passing frequency.

7. A transonic gas turbine stage according to claim 6, wherein said flow control device is a valve (106) located between a pressurised fluid source and said outlet (105).

8. Transonic gas turbine stage according to claim 6, wherein said flow control device comprises a fluid chamber (206) connected to said outlet (105; 205), said fluid chamber (206) including one of a diaphragm and a piston linked to a piezoelectric actuator (208).

9. A transonic gas turbine stage according to any one of claims 6 to 8, wherein said at least one outlet (105; 205) is located at the pressure side of said at least one guide vane (101; 201).

10. A transonic gas turbine stage according to any one of claims 6 to 9, wherein said at least one guide vane (101; 201) has a blunt trailing edge.

11. A gas turbine comprising a transonic gas turbine stage according to any one of claims 6 to 10.

12. A jet engine comprising a transonic gas turbine stage according to any one of claims 6 to 10.

13. A vehicle powered by a gas turbine according to claim 11.

14. A vehicle powered by a jet engine according to claim 12.

15. A vehicle according to claim 13 or 14, wherein said vehicle comprises an aircraft.

## Patentansprüche

1. Verfahren zum Vermindern, in einer Transsonik-Gasturbinenstufe, die eine Turbinendüse mit Leitschaufeln (101; 201) und ein Laufrad (102; 202) mit Laufradschaufeln (103; 203) umfasst, der Auswirkung von Stößen von wenigstens einer der Leitschaufeln (101; 201) auf die Laufradschaufeln (103; 203), wobei das Verfahren das Blasen eines unstetigen Kühlfluidstrahls von einer Oberfläche der wenigstens einen Leitschaufel (101; 201) aus umfasst,
wobei das Verfahren ferner das Synchronisieren des unstetigen Kühlfluidstrahls mit einer Durchgangsfrequenz der Laufradschaufeln (103; 203) umfasst, so dass er ein Durchflussmengenminimum hat, wenn sich eine Laufradschaufel (103; 203) innerhalb eines Bereichs um einen an der Leitschaufel (101; 201) entstehenden Stoß befindet, wobei der unstetige Kühlfluidstrahl innerhalb der hinteren 25 % einer Sehne wenigstens einer Leitschaufel (101; 201) von der Oberfläche aus geblasen wird.

2. Verfahren nach Anspruch 1, wobei der unstetige Kühlfluidstrahl ein pulsierender Strahl ist.

3. Verfahren nach Anspruch 1 oder 2, wobei der unstetige Kühlfluidstrahl ein Gasstrahl ist.

4. Verfahren nach einem der vorhergehenden Ansprüche, wobei der unstetige Kühlfluidstrahl auf der Druckseite der wenigstens einen Leitschaufel (101; 201) angeordnet ist.

5. Verfahren nach einem der vorhergehenden Ansprüche, wobei der unstetige Kühlfluidstrahl mit wenigstens einer zusätzlichen Frequenz, die kein Vielfaches der Anzahl von Schaufeln ist, geblasen wird.

6. Transsonik-Gasturbinenstufe, die Folgendes umfasst:
eine Turbinendüse mit Leitschaufeln (101; 201),
ein Laufrad (102; 202) mit Laufradschaufeln (103; 203) und
einen Kühlfluidkreis (104, 105; 204, 205, 206, 207, 208, 209) zum Umwälzen eines Kühlfluids zu wenigstens einer der Leitschaufeln (101; 201), wobei der Kühlfluidkreis wenigstens einen Auslass (105; 205) an der Oberfläche der wenigstens einen Leitschaufel (101; 201) und eine Durchfluss-Regeleinrichtung zum Erzeugen unstetiger Kühlstrahlen von Kühlfluid umfasst,
wobei der Auslass (105; 205) innerhalb der hinteren 25 % einer Sehne der wenigstens einen Leitschaufel (101; 201) angeordnet ist,
und wobei die Durchfluss-Regeleinrichtung die unstetigen Kühlstrahlen mit einer minimalen Massendurchflussmenge erzeugt, wenn sich eine Laufradschaufel (103; 203) innerhalb eines Bereichs um einen an der Leitschaufel (101; 201) entstehenden Stoß befindet, wobei die unstetigen Kühlstrahlen mit einer Laufradschaufel-Durchgangsfrequenz synchronisiert werden.

7. Transsonik-Gasturbinenstufe nach Anspruch 6, wobei die Durchfluss-Regeleinrichtung ein Ventil (106) ist, das zwischen einer unter Druck gesetzten Fluidquelle und dem Auslass (105) angeordnet ist.

8. Transsonik-Gasturbinenstufe nach Anspruch 6, wobei die Durchfluss-Regeleinrichtung eine Fluidkammer (206) umfasst, die mit dem Auslass (105; 205) verbunden ist, wobei die Fluidkammer (206) entweder eine Membran oder einen mit einem piezoelektrischen Stellantrieb (208) verknüpften Kolben einschließt.

9. Transsonik-Gasturbinenstufe nach einem der Ansprüche 6 bis 8, wobei der wenigstens eine Auslass (105; 205) auf der Druckseite der wenigstens einen Leitschaufel (101; 201) angeordnet ist.

10. Transsonik-Gasturbinenstufe nach einem der Ansprüche 6 bis 9, wobei die wenigstens eine Leitschaufel (101; 201) eine stumpfe Hinterkante hat.

11. Gasturbine, die eine Transsonik-Gasturbinenstufe nach einem der Ansprüche 6 bis 10 umfasst.

12. Strahlturbine, die eine Transsonik-Gasturbinenstufe nach einem der Ansprüche 6 bis 10 umfasst.

13. Fahrzeug, angetrieben durch eine Gasturbine nach Anspruch 11.

14. Fahrzeug, angetrieben durch eine Strahlturbine nach Anspruch 12.

15. Fahrzeug nach Anspruch 13 oder 14, wobei das Fahrzeug ein Flugzeug umfasst.

## Revendications

1. Procédé pour atténuer, dans un étage de turbine à gaz transsonique qui comprend une tuyère avec des aubes guides (101 ; 201) et un rotor (102 ; 202) avec des pales (103 ; 203) de rotor, l'impact de chocs d'au moins une desdites aubes guides (101 ; 201) sur les pales (103 ; 203) de rotor, le procédé comprenant le soufflage d'un jet de fluide de refroidissement instable à partir d'une surface de ladite au moins une aube guide (101 ; 201) ;
le procédé comprenant en outre la synchronisation dudit jet de fluide de refroidissement instable avec une fréquence de passage de pale (103 ; 203) de rotor de manière à avoir un débit minimum quand une pale (103 ; 203) de rotor est dans une zone autour d'un choc ayant son origine sur ladite aube guide (101 ; 201), ledit jet de refroidissement instable étant soufflé à partir de ladite surface dans les 25 % arrière d'une corde de ladite au moins une aube guide (101, 201).

2. Procédé selon la revendication 1, dans lequel ledit jet de fluide de refroidissement instable est un jet pulsatoire.

3. Procédé selon la revendication 1 ou 2, dans lequel ledit jet de fluide de refroidissement instable est un jet de gaz.

4. Procédé selon l'une quelconque des revendications précédentes, dans lequel ledit jet de fluide de refroidissement instable est situé sur le côté pression de ladite au moins une aube guide (101 ; 201).

5. Procédé selon l'une quelconque des revendications précédentes, dans lequel ledit jet de fluide de refroidissement instable est soufflé avec au moins une fréquence additionnelle non multiple du nombre d'aubes.

6. Étage de turbine à gaz transsonique comprenant :
une tuyère de turbine avec des aubes guides (101 ; 201) ;
un rotor (102 ; 202) avec des pales (103 ; 203) de rotor ; et
un circuit de fluide de refroidissement (104, 105 ; 205, 206, 207, 208, 209) pour faire circuler le fluide de refroidissement vers au moins une desdites aubes guides (101 ; 201), le circuit de fluide de refroidissement comprenant au moins une sortie (105 ; 205) sur la surface de ladite au moins une aube guide (101 ; 201) et un dispositif de contrôle d'écoulement pour générer des jets de refroidissement instables de fluide de refroidissement ;
ladite au moins une sortie (105 ; 205) étant située dans les 25 % arrière d'une corde de ladite au moins une aube guide (101 ; 201) ;
et ledit dispositif de contrôle d'écoulement générant lesdits jets de refroidissement instables avec un débit massique minimum quand une pale (103 ; 203) de rotor est dans une zone autour d'un choc ayant son origine sur ladite aube guide (101 ; 201), lesdits jets instables étant synchronisés avec une fréquence de passage de pale de rotor.

7. Étage de turbine à gaz transsonique selon la revendication 6, dans lequel ledit dispositif de contrôle d'écoulement est une soupape (106) située entre une source de fluide pressurisé et ladite sortie (105).

8. Étage de turbine à gaz transsonique selon la revendication 6, dans lequel ledit dispositif de contrôle d'écoulement comprend une chambre de fluide (206) reliée à ladite sortie (105 ; 205), ladite chambre de fluide (206) comprenant un d'un diaphragme et d'un piston relié à un actionneur piézoélectrique (208).

9. Étage de turbine à gaz transsonique selon l'une quelconque des revendications 6 à 8, dans lequel ladite au moins une sortie (105 ; 205) est située sur le côté pression de ladite au moins une aube guide (101 ; 201).

10. Étage de turbine à gaz transsonique selon l'une quelconque des revendications 6 à 9, dans lequel ladite au moins une aube guide (101 ; 201) a un bord de fuite émoussé.

11. Turbine à gaz comprenant un étage de turbine à gaz transsonique selon l'une quelconque des revendications 6 à 10.

12. Turboréacteur comprenant un étage de turbine à gaz transsonique selon l'une quelconque des revendications 6 à 10.

13. Véhicule propulsé par une turbine à gaz selon la revendication 11.

14. Véhicule propulsé par un turboréacteur selon la revendication 12.

15. Véhicule selon la revendication 13 ou 14, ledit véhicule consistant en un aéronef.
